# EUROPÄISCHE PATENTSCHRIFT

(11) **EP 2 212 057 B1**
(45) Veröffentlichungstag und Bekanntmachung des Hinweises auf die Patenterteilung: **23.02.2011**
(21) Anmeldenummer: 08786289.2
(22) Anmeldetag: 22.07.2008
(51) Int. Cl.: B23Q 11/00, B23Q 11/06, B23Q 17/24, B27G 19/04, F16P 3/12

(54) **WERKZEUGMASCHINENSICHERHEITSVORRICHTUNG**
SAFETY DEVICE FOR MACHINE TOOLS
DISPOSITIF DE SÉCURITÉ POUR MACHINE-OUTIL

(30) Priorität: 20.09.2007 DE 102007044804
(43) Veröffentlichungstag der Anmeldung: 04.08.2010
(73) Patentinhaber: Robert Bosch GmbH, 70442 Stuttgart (DE)
(72) Erfinder: LOEWE, Andreas, 31246 Lahstedt (DE); HERRMANN, Ingo, 71292 Friolzheim (DE); MARX, Klaus, 70563 Stuttgart (DE); NIEHSEN, Wolfgang, 31162 Bad Salzdetfurth (DE); KOEDER, Thilo, 70839 Gerlingen (DE); STELLMANN, Georg, 71642 Ludwigsburg (DE); PLATZER, Joachim, 71686 Remseck-Hochberg (DE); JACKISCH, Sebastian, 71638 Ludwigsburg (DE)
(86) Internationale Anmeldenummer: PCT/EP2008/059553
(87) Internationale Veröffentlichungsnummer: WO 2009/040151

(56) Entgegenhaltungen:
- EP-A- 1 422 022
- EP-A- 1 647 357

## Beschreibung

### Stand der Technik

Die Erfindung geht aus von einer Werkzeugmaschinensicherheitsvorrichtung nach dem Oberbegriff des Anspruchs 1.

Es ist eine Erkennungseinheit zur Erkennung einer Anwendungssituation bei einer Werkzeugmaschine bekannt.

Aus der EP 1 422 022 A1 ist ein Sicherheitssystem für ein Elektrowerkzeug, insbesondere eine Tischkreissäge bekannt, welches im Falle einer Gefahrensituation mittels einer Aktuatorik in der Lage ist, eine Notabschaltung der Werkzeugmaschine vorzunehmen. Das System der EP 1 422 022 A1 einen oder mehrere Radarsensoren, die einen oder mehrere Sicherheitsbereiche überwachen. Wird ein Objekt im Sicherheitsbereich detektiert oder nähert sich ein Objekt mit einer erhöhten Geschwindigkeit dem Arbeitswerkzeug, so wir in eine Sicherheitsabschaltung des Elektrowerkzeuges vorgenommen, wenn Position und Annäherungsgeschwindigkeit vorgegebene Grenzwerte überschreiten.

Aus der EP 1 647 357 A1 ist ein Überwachungssystem für eine Gefahrenzone einer Maschine bekannt. Die EP 1 647 357 A1 zeigt eine Presse bzw. Stanze mit einem linear verschieblichen Pressstempel und einem Arbeitstisch zur Auflage eines zu bearbeitenden Werkstückes. Zur Überwachung des Gefahrenbereichs der Presse, der bei der Vorrichtung der EP 1 647 357 A1 insbesondere durch den Arbeitstisch gebildet wird, besitzt die Vorrichtung eine extern zur Presse angeordnete Kamera, die den Arbeitsbereich der Presse beobachtet. Die Bilder der Kamera, die diese während des aktuellen Betriebes der Presse macht, werden mit, in einem Speicher abgelegten Bildern verglichen, die normale, gefahrlose Arbeitssituationen der Presse wiedergeben. Sollte sich ein Gegenstand, wie beispielsweise eine menschliche Hand der Gefahrenzone nähern, so würde dies von dem Kamerasystem erfasst und durch einen Bildvergleich mit den abgespeicherten Anwendungssituationen als eine Getahrensituation (d.h. als ein anomaler Betrieb der Presse) erkannt, so dass es beispielsweise zu einer Sicherheitsabschaltung des Systems kommen kann.

### 15. Vorteile der Erfindung

Die Erfindung geht aus von einer Werkzeugmaschinensicherheitsvorrichtung mit einer Erkennungseinheit, die zur Erkennung einer Anwendungssituation bei einer Werkzeugmaschine vorgesehen ist.

Es wird vorgeschlagen, dass die Erkennungseinheit eine Bilderfassungseinheit zur Überwachung eines ersten Sicherheitsbereichs und eine von der Bilderfassungseinheit unterschiedliche Sensoreinheit zur Überwachung eines zweiten Sicherheitsbereichs umfasst. Es kann dadurch eine besonders hohe Zuverlässigkeit in der Erkennung einer Anwendungssituation bei einer Werkzeugmaschine, insbesondere in der Erkennung eines Vorhandenseins eines menschlichen Körperteils in einem Sicherheitsbereich, erreicht werden. Unter einer "Bilderfassungseinheit" soll insbesondere eine Einheit verstanden werden, die zur Aufnahme von Bildern vorgesehen ist, welche insbesondere für eine Auswertung mittels eines Bildverarbeitungsprogramms geeignet sind. Zweckmäßigerweise steht hierbei die Bilderfassungseinheit in Wirkverbindung mit einer Bildverarbeitungseinheit, die zur Verarbeitung von durch die Bilderfassungseinheit erfassten Bildern vorgesehen ist. Beispielweise ist die Bilderfassungseinheit als Videokamera ausgebildet. Besonders vorteilhaft ist die Bilderfassungseinheit zur Aufnahme von Bildern im sichtbaren Bereich vorgesehen. Die Sensoreinheit und die Bilderfassungseinheit weisen vorzugsweise eine unterschiedliche Erfassungsfrequenz bzw. Bildfrequenz (oder framerate) auf. Besonders vorteilhaft weist die Sensoreinheit eine höhere Erfassungsfrequenz als die Bilderfassungseinheit auf.

Gemäß der Erfindung weist die Sensoreinheit zumindest einen Empfindlichkeitsbereich zur Erfassung einer Strahlung im Infrarotbereich auf, wodurch eine hohe Erfassungsfrequenz der Sensoreinheit und daher eine kurze Reaktionszeit bei einem Erkennungsvorgang erreicht werden können. Insbesondere wird vorgeschlagen, dass der Empfindlichkeitsbereich zur Erfassung einer Strahlung in einem thermischen Infrarotbereich vorgesehen ist. Unter einem "thermischen" Infrarotbereich soll in diesem Zusammenhang insbesondere ein Wellenlängenintervall des Infrarotspektrums verstanden werden, welches oberhalb ei= ner Wellenlänge von 8 µm und vorzugsweise unterhalb einer Wellenlänge von 15 µm angeordnet ist. Insbesondere ist der thermische Infrarotbereich im IR-C Bereich. Hierbei ist die Erkennungseinheit vorteilhafterweise zu einer Erkennung anhand einer auf der Erfassung einer Temperaturkenngröße basierenden Unterscheidung zwischen Materialarten abgestimmt. Insbesondere ist durch die Wahl des Empfindlichkeitsbereichs die Sensoreinheit auf die Erkennung von menschlichem Gewebe im zweiten Sicherheitsbereich abgestimmt.

Der erste Sicherheitsbereich und der zweite Sicherheitsbereich können identisch ausgebildet sein. Es ist jedoch von Vorteil, wenn die Bilderfassungseinheit und die Sensoreinheit zur Überwachung von unterschiedlichen Sicherheitsbereichen vorgesehen sind. Beispielsweise können die Sicherheitsbereiche voneinander getrennt sein oder sie können aneinander angrenzen. Ein vorteilhaftes Zusammenwirken der Bilderfassungseinheit und der Sensoreinheit bei der Erkennung einer Anwendungssituation kann erreicht werden, wenn die Sicherheitsbereiche sich überlappen. Insbesondere kann eine besonders effektive Komplementarität erreicht werden, wenn der erste Sicherheitsbereich den zweiten Sicherheitsbereich umfasst.

Ferner wird vorgeschlagen, dass der zweite Sicherheitsbereich einem Werkzeugbereich entspricht, wodurch eine hohe Sicherheit erreicht werden kann. In diesem Zusammenhang ist besonders vorteilhaft, wenn die Sensoreinheit eine höhere Erfassungsfrequenz als die Bilderfassungseinheit aufweist, wodurch eine besonders kurze Reaktionszeit bei der Erkennung einer Materialart im Werkzeugbereich erreicht werden kann. Unter einem "Werkzeugbereich" soll in diesem Zusammenhang insbesondere ein Bereich verstanden werden, der sich aus Punkten zusammensetzt, die einen kleinsten Abstand zu einem Werkzeug und/oder zu einem Werkzeugstreckenbereich der Werkzeugmaschine von maximal 10 cm, vorteilhaft maximal 5 cm und bevorzugt maximal 2 cm aufweisen. Ein "Werkzeugstreckenbereich" setzt sich hierbei insbesondere aus Punkten zusammen, die von einem Werkzeug potentiell belegbar sind, wie z.B. aufgrund einer beweglichen Lagerung einer Werkzeuglagereinheit zum Lagern des Werkzeugs relativ zu einer Werkzeugmaschinenarbeitsfläche, beispielsweise bei einer Kapp- und Gehrungssäge, Paneelsäge, Zugsäge usw. Die Bilderfassungseinheit besitzt ein Blickfeld, das im Betrieb vorteilhafterweise einen überwachten Bereich der Werkzeugmaschine festlegt. Der überwachte Bereich umfasst vorzugsweise zumindest einen Teilbereich des Werkzeugbereichs. Vorteilhafterweise umfasst die vertikale Projektion des überwachten Bereichs auf die Arbeitsfläche die vertikale Projektion des Werkzeugbereichs auf die Arbeitsfläche. Ferner kann der überwachte Bereich zumindest einen Teilbereich des Werkzeugstreckenbereichs umfassen.

Eine besonders schnelle Erkennung kann erreicht werden, wenn die Erkennungseinheit eine Auswerteeinheit aufweist, die anhand von durch die Bilderfassungseinheit erfassten Bilddaten zur Auswertung von zumindest einem Merkmal aus der Gruppe Farbe, Kontur und Textur vorgesehen ist. Besonders vorteilhaft ist die Auswerteeinheit dazu vorgesehen, eine Anwendungssituation mittels eines Vergleichs von Bilddaten mit vorgespeicherten Daten von Musterbildern zu erkennen.

Des Weiteren wird vorgeschlagen, dass die Erkennungseinheit eine Auswerteeinheit aufweist, die zur Ermittlung einer Bewegungsbahn eines sich in einem Sicherheitsbereich bewegenden Objekts vorgesehen ist. Dadurch kann eine hohe Geschwindigkeit in der Erkennung eines Gefahrenpotentials bei einem Betrieb der Werkzeugmaschine erreicht werden. Besonders vorteilhaft ist, wenn die Auswerteeinheit dazu vorgesehen ist, die Bewegungsbahn auf eine künftige Position des Objekts relativ zum Werkzeug zu extrapolieren. Vorzugsweise erfolgt die Ermittlung der Bewegungsbahn anhand von Bilddaten, die von der Bilderfassungseinheit erfasst sind.

In einer vorteilhaften Weiterbildung der Erfindung wird vorgeschlagen, dass die Erkennungseinheit eine Auswerteeinheit aufweist, die zur Ermittlung eines Geschwindigkeitsgrads eines sich in einem Sicherheitsbereich bewegenden Objekts vorgesehen ist. In diesem Zusammenhang kann eine hohe Flexibilität in der Anwendung der Werkzeugmaschine erreicht werden, wenn die Werkzeugbetriebsüberwachungsvorrichtung zumindest zwei Sicherheitsmodi aufweist, die jeweils einem Geschwindigkeitsgrad zugeordnet sind. Vorzugsweise erfolgt die Ermittlung des Geschwindigkeitsgrads anhand von Bilddaten, die von der Bilderfassungseinheit erfasst sind.

In einer bevorzugten Ausführung der Erfindung wird vorgeschlagen, dass die Werkzeugmaschinensicherheitsvorrichtung eine Steuereinheit aufweist, die zur Auslösung einer Aktorikeinheit zur Durchführung einer Sicherheitsmaßnahme einen Erkennungsvorgang der Bilderfassungseinheit und einen Erkennungsvorgang der Sensoreinheit voraussetzt. Dadurch kann eine hohe Zuverlässigkeit erreicht werden und es können Fehlauslösungen der Aktorikeinheit vorteilhaft vermieden werden. Hierbei setzt die Steuereinheit insbesondere das Erzeugen eines mittels der Bildererfassungseinheit bewirkten Erkennungssignals und das Erzeugen eines mittels der Sensoreinheit bewirkten Erkennungssignals jeweils zu einem Zeitpunkt vor der Auslösung der Aktorikeinheit voraus.

Außerdem wird vorgeschlagen, dass die Werkzeugmaschinensicherheitsvorrichtung eine Steuereinheit aufweist, die in zumindest einem Betriebsmodus dazu vorgesehen ist, eine Aktorikeinheit zur Durchführung einer Sicherheitsmaßnahme abhängig von einem mittels der Sensoreinheit ausgelösten Erkennungssignal auszulösen, wodurch eine schnelle Erkennung erreicht werden kann. Hierbei kann die Bilderfassungseinheit einem Warnungsmodus der Werkzeugmaschinensicherheitsvorrichtung zugeordnet sein.

In diesem Zusammenhang können eine hohe Sicherheit und ein hoher Bedienkomfort erreicht werden, wenn die Werkzeugmaschinensicherheitsvorrichtung ein Mittel aufweist, das in einem Sperrmodus der Steuereinheit dazu vorgesehen ist, das Auslösen der Aktorikeinheit zu sperren. Es soll unter "dem" Auslösen der Aktorikeinheit insbesondere das Auslösen anhand eines von der Sensoreinheit bewirkten Erkennungssignals verstanden werden, wobei ein Auslösen der Aktorikeinheit anhand eines von der Bilderfassungseinheit bewirkten Erfassungssignals im Sperrmodus durchführbar sein kann.

Ferner wird vorgeschlagen, dass das Mittel in einem Freigabemodus der Steuereinheit dazu vorgesehen ist, das Sperren abhängig von einem mittels der Bilderfassungseinheit ausgelösten Erkennungssignal aufzuheben, wodurch eine vorteilhafte Komplementarität der Sensoreinheit und der Bilderfassungseinheit erreicht werden kann. Insbesondere kann das Aufheben des Sperrmodus anhand einer ermittelten Bewegungsbahn eines Objekts im ersten Sicherheitsbereich bewirkt werden.

In einer weiteren Ausführung der Erfindung wird vorgeschlagen, dass die Werkzeugmaschinensicherheitsvorrichtung eine Steuereinheit umfasst, die einen Kalibriermodus zur Kalibration der Erkennungseinheit aufweist, wodurch die Präzision und die Zuverlässigkeit bei einem Erkennungsvorgang der Erkennungseinheit gesteigert werden können.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Seitenansicht einer Tischkreissäge mit einer Erkennungseinheit,
- Fig. 2: die Tischkreissäge in einer Draufsicht von o- ben mit zwei Sicherheitsbereichen der Erken- nungseinheit,
- Fig. 3: eine schematische Ansicht der Erkennungsein- heit und von Aktorikeinheiten,
- Fig. 4: das Ermitteln der Bewegungsbahn einer Hand in einem ersten Sicherheitsbereich und
- Fig. 5: das Erkennen der Hand in einem Werkzeugbe- reich.

### Beschreibung des Ausführungsbeispiels

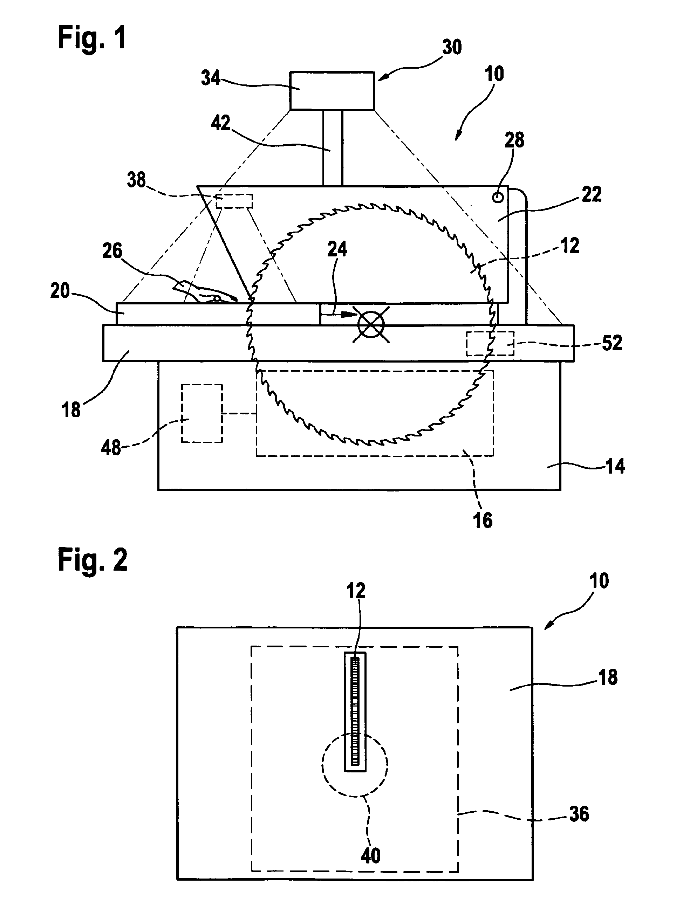

Figur 1 zeigt eine als Stationärgerät, und zwar als Tischkreissäge ausgebildete Werkzeugmaschine 10 in einer Seitenansicht. Die Werkzeugmaschine 10 weist ein als scheibenförmiges Sägeblatt ausgebildetes Werkzeug 12 auf, das in einem Sägebetrieb mittels einer in einem Antriebsgehäuse 14 angeordneten und als Elektromotor ausgebildeten Antriebseinheit 16 rotatorisch angetrieben wird. Auf dem Antriebsgehäuse 14 abgestützt ist ein Arbeitstisch 18 angeordnet, auf welchem ein zu bearbeitendes Werkstück 20 aufgelegt werden kann. Zum Schutz eines Bedieners umfasst die Werkzeugmaschine 10 eine als Schutzvorrichtung ausgebildete Schutzvorrichtung 22 zum Bedecken des Werkzeugs 12, die eine Schneidkante des Werkzeugs 12 um einen Teil ihres Umfangs bedeckt. In einem unbetriebenen Zustand der Werkzeugmaschine 10 bedeckt sie den aus dem Arbeitstisch 18 herausragenden Teil des Werkzeugs 12. Zur Durchführung einer Bearbeitung des Werkstücks 20 wird dieses auf bekannte Weise in einer Arbeitsrichtung 24 in Richtung auf das Werkzeug 12 durch einen Bediener hinbewegt, von dem eine Hand 26 in der Figur schematisch dargestellt ist. Hierbei wird die Schutzvorrichtung 22, die um eine Drehachse 28 drehbar gelagert ist, durch das Werkstück 20 nach oben geschwenkt, wodurch die Werkzeugschneidkante freigegeben wird.

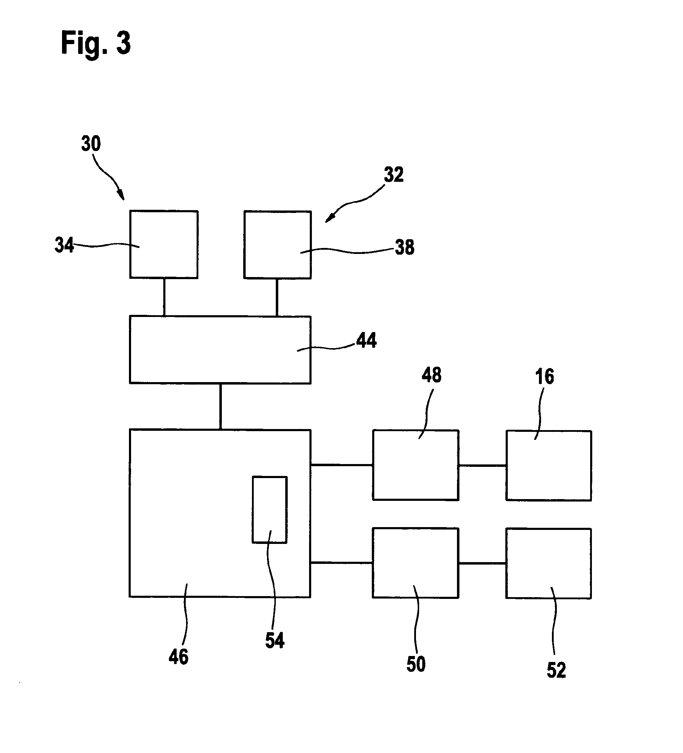

Zur Erhöhung der Bedienersicherheit ist die Werkzeugmaschine 10 mit einer Werkzeugmaschinensicherheitsvorrichtung 30 versehen. Die Werkzeugmaschinensicherheitsvorrichtung 30 weist eine in Figur 3 gezeigte Erkennungseinheit 32 auf, die zur Erkennung einer Gefahrensituation bei einer Anwendung der Werkzeugmaschine 10 vorgesehen ist. Hierzu weist die Erkennungseinheit 32 eine als Videokamera ausgebildete Bilderfassungseinheit 34 auf, die zur Überwachung eines ersten Sicherheitsbereichs 36 dient. Der Sicherheitsbereich 36 ist in Figur 2 zu sehen, die die Werkzeugmaschine 10 in einer Ansicht von oben darstellt. Der Übersichtlichkeit halber wurde in Figur 2 auf die Darstellung der Schutzvorrichtung 22 verzichtet. Zusätzlich zur Bilderfassungseinheit 34 weist die Erkennungseinheit 32 eine Sensoreinheit 38 auf, die zur Überwachung eines zweiten Sicherheitsbereichs 40 vorgesehen ist.

Wie der Figur 2 zu entnehmen ist, sind die Sicherheitsbereiche 36, 40 voneinander unterschiedlich ausgebildet. Der zweite Sicherheitsbereich 40 entspricht einem Werkzeugbereich. Dieser setzt sich aus Punkten zusammen, die einen kleinsten Abstand zum Werkzeug 12 von maximal 2 cm aufweisen. Insbesondere setzt sich der überwachte Werkzeugbereich aus Punkten zusammen, die einen kleinsten Abstand zum vorderen Kantenbereich des Werkzeugs 12 von maximal 2 cm aufweisen. Hierbei entspricht der vordere Kantenbereich des Werkzeugs 12 dem Bereich, in welchem das Werkstück 20 die rotierende Kante des Werkzeugs 12 kontaktiert. Im betrachteten Ausführungsbeispiel ist der Sicherheitsbereich 40 kreisförmig ausgebildet. Er weist einen Mittelpunkt im Kantenbereich des Werkzeugs 12 und einen Radius von 2 cm auf. Die Ausgestaltung des überwachten Sicherheitsbereichs 40 ist durch die Sensoreinheit 38, insbesondere mittels einer nicht näher dargestellten Optikeinheit der Sensoreinheit 38, festgelegt, und kann weitere, dem Fachmann als sinnvoll erscheinende Formen aufweisen. Der erste Sicherheitsbereich 36 ist größer als der zweite Sicherheitsbereich 40 und umfasst den zweiten Sicherheitsbereich 40. Die Kontur des ersten Sicherheitsbereichs 36 auf dem Arbeitstisch 18 umfasst insbesondere zumindest 25 %, vorteilhaft zumindest 50 % der gesamten Arbeitstischoberfläche.

Die Bilderfassungseinheit 34 ist mittels einer als Befestigungsarm ausgebildeten Tragvorrichtung 42 oberhalb des Arbeitstischs 18, und zwar oberhalb des Werkzeugs 12 festgehalten, wobei die Tragvorrichtung 42 am Arbeitstisch 18 und/oder am Antriebsgehäuse 14 befestigt sein kann. Die Sensoreinheit 38 ist in der Schutzvorrichtung 22 befestigt, und zwar vorzugsweise in einem Teilbereich der Schutzvorrichtung 22, der über dem Kantenbereich des Werkzeugs 12 angeordnet ist. Es ist ferner denkbar, dass die Bilderfassungseinheit 34 in der Schutzvorrichtung 22 angeordnet ist. Hierbei kann die Bilderfassungseinheit 34 zum Erreichen eines großen Blickfelds mit einer Weitschutzoptik versehen sein. Eine Anordnung der Bilderfassungseinheit 34 und/oder der Sensoreinheit 38 seitlich des Werkzeugs 12, wie z.B. an einem Werkstücksanschlag, ist denkbar.

Die Funktionsweise der Werkzeugmaschinensicherheitsvorrichtung 30 wird anhand von Figur 3 beschrieben. Diese zeigt in einer schematischen Ansicht die Erkennungseinheit 32, welche die Bilderfassungseinheit 34, die Sensoreinheit 38 und eine Auswerteeinheit 44 umfasst. Diese ist zur Auswertung von Daten, die von der Bilderfassungseinheit 34 bzw. von der Sensoreinheit 38 erfasst werden, vorgesehen. Die Auswerteeinheit 44 kann ein Einzelauswertemittel sein, das der Bilderfassungseinheit 34 und der Sensoreinheit 38 zugeordnet ist, oder sie kann ein erstes Auswertemittel für die Bilderfassungseinheit 34 und ein von dem ersten Auswertemittel unterschiedliches Auswertemittel für die Sensoreinheit 38 aufweisen. Die Auswerteeinheit 44 weist beispielsweise zumindest einen Mikroprozessor auf und kann eine Speichereinheit, z.B. für ein Auswerteprogramm und/oder für Auswertedaten, aufweisen. Die Werkzeugmaschinensicherheitsvorrichtung 30 weist ferner eine Steuereinheit 46 auf, die mit der Auswerteeinheit 44 und mit Aktorikeinheiten 48, 50 in Wirkverbindung steht. Die Aktorikeinheit 48, die in Wirkverbindung mit der Antriebseinheit 16 steht, ist dazu vorgesehen, in Abhängigkeit eines Auslösesignals der Steuereinheit 46 einen Antrieb des Werkzeugs 12 zu ändern. Insbesondere kann mittels der Aktorikeinheit 48 die Drehzahl des Werkzeugs 12 vermindert werden oder es kann der Werkzeugantrieb vollständig gestoppt werden. Die Werkzeugmaschinensicherheitsvorrichtung 30 weist ferner eine weitere Aktorikeinheit 50 auf, die in Wirkverbindung mit der Steuereinheit 46 steht und zum Antreiben eines Sicherungsmittels 52 in Abhängigkeit eines Auslösesignals der Steuereinheit 46 vorgesehen ist. Dieses Sicherungsmittel 52, das ebenfalls in Figur 1 zu sehen ist, ist als Bremsvorrichtung ausgebildet, welche z.B. als Bremsscheibe oder Bremstrommel ausgeführt ist, die zum Bremsen des rotierenden Werkzeugs 12 dient. Hierbei kann das Sicherungsmittel 52 das Werkzeug 12 durch Herstellen eines direkten Kontakts mit dem Werkzeug 12 und/oder mit einer Antriebswelle zum Antreiben des Werkzeugs 12 bremsen. Die Werkzeugmaschinensicherheitsvorrichtung 30 kann weitere Sicherungsmittel aufweisen, die mittels der Aktorikeinheit 50 angetrieben werden können. Beispielsweise kann ein Sicherungsmittel vorgesehen sein, welches bei Bedarf das Werkzeug 12 aus dem Arbeitsbereich der Werkzeugmaschine 10 entfernt, wie z.B. durch ein Herunterfahren des Werkzeugs 12 in das Antriebsgehäuse 14. Alternativ oder zusätzlich kann die Aktorikeinheit 50 ein Sicherungsmittel antreiben, welches bei Bedarf eine Bewegung der Schutzvorrichtung 22 zum Sperren des Zugangs zum Kantenbereich des Werkzeugs 12 auslöst.

Die Bilderfassungseinheit 34 ist, wie oben beschrieben, als Videokamera ausgebildet, die insbesondere zur Aufnahme von Bildern im sichtbaren Frequenzbereich vorgesehen ist. Eine Ausbildung der Bilderfassungseinheit 34 als Infrarotkamera ist denkbar. Hierbei kann diese Infrarotkamera zur Erfassung von Bildern in einem oder in mehreren der Bereiche IR-A, IR-B und/oder IR-C vorgesehen sein. Zusätzlich zur Erfassung im Infrarotbereich kann die Infrarotkamera zur Erfassung von Bildern im sichtbaren Bereich vorgesehen sein. Die Auswerteeinheit 44 dient dazu, aus Bilddaten, die von der Bilderfassungseinheit 34 erfasst werden, ein Farbenmerkmal, ein Konturmerkmal und/oder ein Texturmerkmal eines sich im ersten Sicherheitsbereich 36 befindenden Objekts auszuwerten. Insbesondere ist die Auswerteeinheit 44 dazu vorgesehen, anhand von einem oder mehreren dieser Merkmale das Vorhandensein eines menschlichen Körperteils im Sicherheitsbereich 36 zu erkennen. Die Auswerteeinheit 44 untersucht hierbei die von der Bilderfassungseinheit 34 dauernd erfassten Bilddaten gezielt auf ein für menschliches Gewebe und/oder für ein von einem Bediener getragenes typisches Kleidungsstück, wie z.B. einen Schutzhandschuh, typisches Merkmal. Der Erkennungsvorgang kann beispielsweise mittels eines Vergleichs von erfassten Bilddaten mit in einer Speichereinheit gespeicherten Bildmusterdaten erfolgen.

Die Steuereinheit 46 ist ferner mit einem Kalibriermodus versehen. Dieser ist z.B. in der Form eines Programms in einer nicht näher dargestellten, der Steuereinheit 46 zugeorndeten Speichereinheit gespeichert. Bei der Durchführung des Kalibriermodus erfolgt im Vorfeld eines Werkzeugantriebs eine Kalibrierung der Erkennungseinheit 32, indem der Endbenutzer der Werkzeugmaschine 10 eine Hand ins Blickfeld der Bilderfassungseinheit 34 und/oder der Sensoreinheit 38 hält, wobei Merkmale der Hand mittels der Auswerteeinheit 44 analysiert werden und in einer Speichereinheit gespeichert werden. Somit können die Lichtverhältnisse und die Farbgebung der Hand bei einem späteren Erkennungsvorgang berücksichtigt werden.

Führt ein Auswertevorgang der Auswerteeinheit 44 zu einer Erkennung, d.h. liegt ein Erkennungsvorgang vor, so wird ein Erkennungssignal auf die Steuereinheit 46 gegeben. Die Auflösung der Bilderfassungseinheit 34 ist derart gewählt, dass eine Merkmalsauswertung der erfassten Bilddaten mit einer hohen Genauigkeit erreicht werden kann. Beispielsweise kann die Bilderfassungseinheit 34 eine Auflösung von zumindest 64*64 Pixel aufweisen.

Vorzugsweise weist die Sensoreinheit 38 eine geringere Erfassungszeit zum Abtasten des zugeordneten Sicherheitsbereichs 40 als die Bilderfassungseinheit 34 auf. Die Bilderfassungseinheit 34 als Videokamera weist typischerweise eine Bildfrequenz auf, die einer bestimmten Erfassungszeit entspricht. Es wird eine Sensoreinheit 38 gewählt, die eine geringere Auflösung aufweist als die Bilderfassungseinheit 34. Beispielsweise weist die Sensoreinheit 38 eine Auflösung auf, die typischerweise zwei Größenordnungen kleiner als die Auflösung der Bilderfassungseinheit 34 ist. Hierdurch kann mittels der Sensoreinheit 38 ein kürzerer Erkennungsvorgang bei der Erkennung des Vorhandenseins eines menschlichen Körperteils im entsprechenden Sicherheitsbereich 40 erreicht werden. Zum Erreichen einer besonders kleinen Erkennungszeit ist die Sensoreinheit 38 als Infrarotsensor ausgebildet. Eine derartige Sensorik weist eine typische Bildfrequenz auf, die größer als die Bildfrequenz der Bilderfassungseinheit 34 ist und demnach einer kleineren Erfassungszeit entspricht. Die Sensoreinheit 38 weist vorzugsweise einen Empfindlichkeitsbereich auf, der zur Erfassung einer Strahlung im thermischen Infrarotbereich geeignet ist. Insbesondere ist der Empfindlichkeitsbereich zur Erfassung einer Schwarzkörperstrahlung in einem Wellenlängenintervall vorgesehen, welches einem Temperaturintervall um eine für einen menschlichen Körperteil typische Temperatur entspricht. Im betrachteten Beispiel ist die Sensoreinheit 38 als Thermopile (oder Thermosäule) ausgebildet. Die Sensoreinheit 38 kann außerdem als pyroelektrischer Sensor oder Bolometer-Sensor ausgebildet sein. Führt ein Auswertevorgang der Auswerteeinheit 44 anhand von durch die Sensoreinheit 38 erfassten Temperaturkenngrößen zu einer Erkennung, so wird von der Auswerteeinheit 44 ein Erkennungssignal auf die Steuereinheit 46 gegeben.

Die Steuereinheit 46 dient dazu, ein Auslösen einer oder mehrerer der Aktorikeinheiten 48, 50 in Abhängigkeit eines Signals der Auswerteeinheit 44 zu bewirken. Hierbei überträgt sie ein Auslösesignal an die entsprechende Aktorikeinheit 48 bzw. 50. Die Steuereinheit 46 weist vorzugsweise zumindest einen Mikroprozessor auf und sie kann ferner eine Speichereinheit zum Speichern von Daten umfassen, wie z.B. zum Speichern eines Programms, die zur Durchführung von Steuervorgängen dienen. Zur Auslösung einer der Aktorikeinheiten 48, 50 setzt die Steuereinheit 46 einen Erkennungsvorgang der Bilderfassungseinheit 34 und einen Erkennungsvorgang der Sensoreinheit 38 voraus. Liegt ein durch die Bilderfassungseinheit 34 durchgeführter Erkennungsvorgang vor, d.h. ist ein mittels der Bilderfassungseinheit 34 ausgelöstes Erkennungssignal auf die Steuereinheit 46 gegeben, so kann nach diesem Vorgang eine Aktorikeinheit 48 bzw. 50 anhand eines mittels der Sensoreinheit 38 ausgelösten Erkennungssignals durch die Steuereinheit 46 ausgelöst werden. Wird durch einen Erkennungsvorgang der Sensoreinheit 38 ein Erkennungssignal auf die Steuereinheit 46 gegeben, ohne dass davor ein Erkennungssignal mittels der Bilderfassungseinheit 34 ausgelöst worden ist, so wird kein Auslösen einer Aktorikeinheit 48 bzw. 50 durch die Steuereinheit 46 bewirkt. Hierzu ist die Steuereinheit 46 mit einem Steuermittel 54 versehen. Dieses ist dazu vorgesehen, in einem Sperrmodus der Steuereinheit 46 ein Auslösen einer Aktorikeinheit 48 bzw. 50 bei einem durch die Sensoreinheit 38 bewirkten Erkennungssignal zu sperren. Bei einer Inbetriebnahme der Werkzeugmaschinensicherheitsvorrichtung 30 wird von der Steuereinheit 46 der Sperrmodus automatisch durchgeführt. Wird ein mittels der Sensoreinheit 38 ausgelöstes Erkennungssignal auf die Steuereinheit 46 gegeben, so wird dieses Erkennungssignal in ein Auslösesignal zum Auslösen einer Aktorikeinheit 48 bzw. 50 nicht umgesetzt. Ein Auslösen einer Aktorikeinheit 48 bzw. 50 anhand eines mittels der Bilderfassungseinheit 34 bewirkten Erkennungssignals ist im Sperrmodus möglich. Wird ein mittels der Bilderfassungseinheit 34 ausgelöstes Erkennungssignal auf die Steuereinheit 46 gegeben, so wird von der Steuereinheit 46 ein Freigabemodus durchgeführt, bei welchem das Steuermittel 54 das Sperren aufhebt. In diesem Freigabemodus kann ein von der Sensoreinheit 38 ausgelöstes Erkennungssignal in ein Auslösesignal zum Auslösen einer Aktorikeinheit 48 bzw. 50 von der Steuereinheit 46 umgesetzt werden.

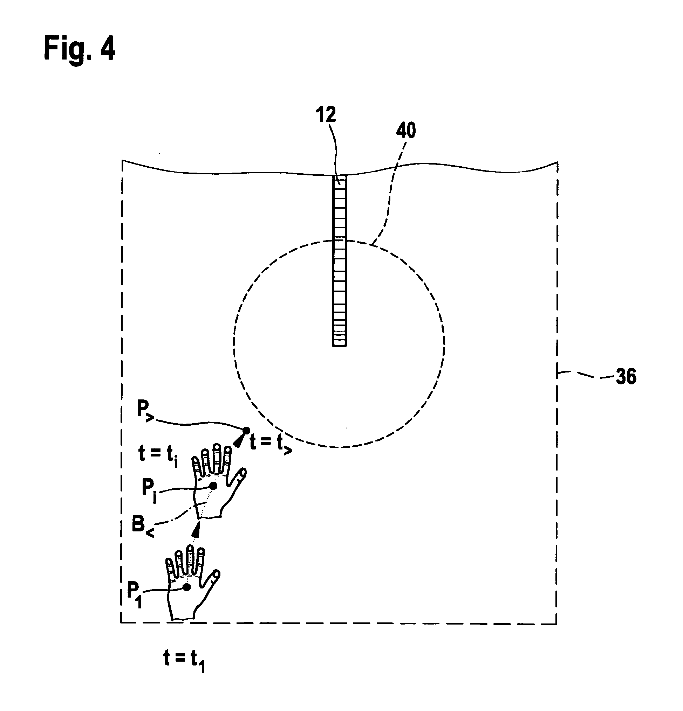

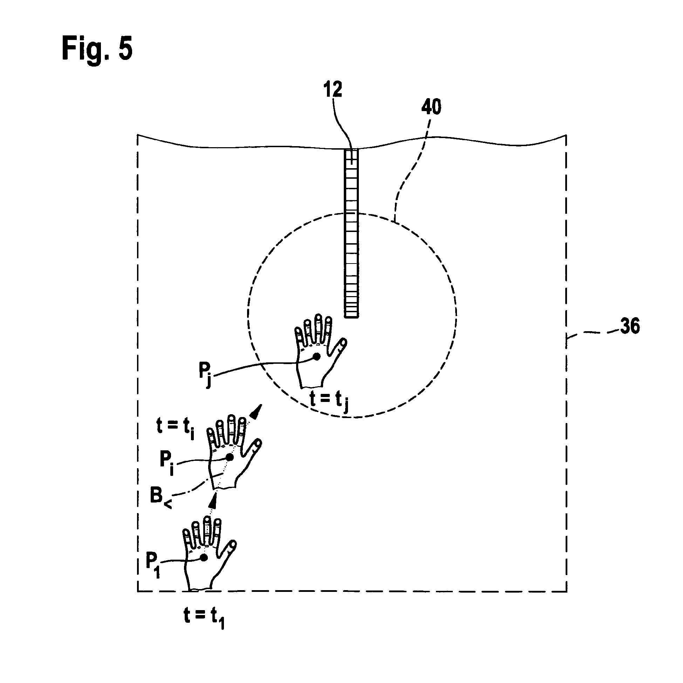

Erkennungsvorgänge mittels der Bilderfassungseinheit 34 und der Sensoreinheit 38 werden anhand von den Figuren 4 und 5 näher erläutert. Die Figuren 4 und 5 zeigen einen Teilbereich des Arbeitstischs 18, in welchem die Konturen der zu überwachenden Sicherheitsbereiche 36, 40 mittels gestrichelter Linien dargestellt sind, und ein Teilbereich des Werkzeugs 12 in einer Ansicht von oben. Nach dem Erkennen des Vorhandenseins eines menschlichen Körperteils im Sicherheitsbereich 36, insbesondere einer Hand eines Bedieners, wird dessen Position P₁ zu einem Zeitpunkt t₁ relativ zum Sicherheitsbereich 40 ermittelt. Die Bilderfassungseinheit 34 erfasst Bilder des Sicherheitsbereichs 36 laufend zu sukzessiven Zeitpunkten. Die Auswertung der Bilddaten erfolgt in Echtzeit, indem die erfasste Folge laufend mittels der Auswerteeinheit 44 ausgewertet wird. Hierbei können die erfassten Bilder nacheinander ausgewertet werden. Im in Figur 4 betrachteten Beispiel wird die Hand des Bedieners in einer Position Pᵢ zu einem späteren Zeitpunkt tᵢ lokalisiert. Zwischen den Zeitpunkten t₁ und tᵢ kann eine Folge von Bildern aufgenommen werden, die der Übersichtlichkeit halber in der Figur nicht dargestellt ist. Durch die Ermittlung der verschiedenen Positionen der Hand eines Bedieners zwischen P₁ und Pᵢ wird durch die Auswerteeinheit 44 die Bewegungsbahn B< der Hand des Bedieners ermittelt. Anhand dieser Bewegungsbahn B<, die von der Hand des Bedieners vor dem aktuellen Erfassungszeitpunkt tᵢ zurückgelegt worden ist, ermittelt die Auswerteeinheit 44 eine für die Hand des Bedieners zu einem späteren Zeitpunkt t> erwartete Position P>. Hierbei wird die anhand von aufgenommenen Bildern ermittelte Bewegungsbahn B< durch die Auswerteeinheit 44 auf die künftige Position P> extrapoliert. Wird durch die Auswerteeinheit 44 die Bewegungsbahn B< bzw. eine extrapolierte Bewegungsbahn als eine auf den Sicherheitsbereich 40 zuführende Bewegungsbahn identifiziert, so überträgt die Auswerteeinheit 44 ein Erkennungssignal an die Steuereinheit 46. Diese bewirkt den Übergang vom Sperrmodus in den Freigabemodus. In einem Sicherheitsmodus ist die Steuereinheit 46 dazu vorgesehen, anhand dieses mittels der Bilderfassungseinheit 34 ausgelösten Erkennungssignals eine Warnung des Bedieners mittels eines optischen und/oder akustischen Signals auszulösen. Die Auswerteeinheit 44 ist ferner dazu vorgesehen, anhand von zu unterschiedlichen Zeitpunkten aufgenommenen Bildern einen Geschwindigkeitsgrad der erfassten Hand eines Bedieners im Sicherheitsbereich 36 zu ermitteln. Die Auswerteeinheit 44 ermittelt anhand eines Vergleichs der zu zwei Zeitpunkten t₁ und tᵢ ermittelten Positionen P₁ und Pᵢ einen Geschwindigkeitsgrad. Beispielsweise kann eine Handbewegung einer Geschwindigkeitsstufe "schnell", "mittelschnell", "langsam" usw. zugeordnet werden. Wird eine Handbewegung als eine "schnelle" Bewegung identifiziert, so löst die Auswerteeinheit 44 ein Erkennungssignal aus, anhand dessen die Steuereinheit 46 ein Auslösen einer Aktorikeinheit 48 bzw. 50 auslöst. Wird eine Bewegung als eine "mittelschnelle" oder "langsame" Bewegung erkannt, die auf den Sicherheitsbereich 40 zuführt, so löst die Auswerteeinheit 44 ein Erkennungssignal aus, anhand dessen der oben beschriebene Freigabemodus eingeschaltet wird und der Bediener gewarnt wird.

Figur 5 zeigt die in Figur 4 gezeigte Anordnung zu einem Zeitpunkt tⱼ > tᵢ. Hierbei befindet sich die Hand des Bedieners an einer Position Pⱼ im Sicherheitsbereich 40. Die Sensoreinheit 38 erkennt mittels der Erfassung der Schwarzkörperstrahlung der Hand die Temperatursignatur der Hand, wodurch nach einer kurzen Erkennungszeit ein Erkennungssignal an die Steuereinheit 46 übertragen wird. Wie oben beschrieben, befindet sich die Steuereinheit 46 aufgrund der ermittelten Bewegungsbahn B< in deren Freigabemodus und die Steuereinheit 46 setzt das Erkennungssignal in ein Auslösesignal zur Auslösung einer Aktorikeinheit 48 bzw. 50 um. Dabei wird z.B. der Rotationsantrieb des Werkzeugs 12 gestoppt bzw. das Werkzeug 12 wird in das Antriebsgehäuse 14 durch Auslösung einer Federsicherung gefahren. In einem weiteren Sicherheitsmodus ist denkbar, dass die Auswerteeinheit 44 anhand von durch die Sensoreinheit 38 erfassten Kenngrößen eine Bewegungsbahn der Hand im Sicherheitsbereich 40 ermittelt und ein Erkennungssignal in Abhängigkeit des Verlaufs der ermittelten Bewegungsbahn auslöst.

Die erfindungsgemäße Werkzeugmaschinensicherheitsvorrichtung 30 eignet sich für weitere Werkzeugmaschinen, bei welchen eine Erkennung eines menschlichen Körperteils vorteilhaft ist, wie bei Kapp- und Gehrungssägen, Zugsägen, Paneelsägen, Oberfräsen usw.

## Patentansprüche

1. Werkzeugmaschinensicherheitsvorrichtung mit einer Erkennungseinheit (32), die zur Erkennung einer Anwendungssituation bei einer Werkzeugmaschine (10) vorgesehen ist, wobei die Erkennungseinheit (32) eine Bilderfassungs-einheit (34) zur Überwachung eines ersten Sicherheitsbereichs (36) aufweist, **dadurch gekennzeichnet, dass** die Erkennungseinheit (32) eine von der Bilderfassungseinheit (34) unterschiedliche Sensoreinheit (38) zur Überwachung eines zweiten Sicherheitsbereichs (40) umfasst, wobei die Sensoreinheit (38) zumindest einen Empfindlichkeitsbereich zur Erfassung einer Strahlung im Infrarotbereich aufweist.

2. Werkzeugmaschinen sicherheitsvorrichtung Anspruch 1, **dadurch gekennzeichnet, dass** der Empfindlichkeitsbereich zur Erfassung einer Strahlung in einem thermischen Infrarotbereich vorgesehen ist.

3. Werkzeugmaschinensicherheitsvorrichtung nach einem der vorhergehenden Ansprüche, **dadurch gekennzeichnet, dass** der erste Sicherheitsbereich (36) den zweiten Sicherheitsbereich (40) umfasst.

4. Werkzeugmaschinensicherheitsvorrichtung nach einem der vorhergehenden Ansprüche, **dadurch gekennzeichnet, dass** der zweite Sicherheitsbereich (40) einem Werkzeugbereich entspricht.

5. Werkzeugmaschinensicherheitsvorrichtung nach einem der vorhergehenden Ansprüche, **dadurch gekennzeichnet, dass** die Erkennungseinheit (32) eine Auswerteeinheit (44) aufweist, die anhand von durch die Bilderfassungseinheit (34) erfassten Bilddaten zur Auswertung von zumindest einem Merkmal aus der Gruppe Farbe, Kontur und Textur vorgesehen ist.

6. Werkzeugmaschinensicherheitsvorrichtung nach einem der vorhergehenden Ansprüche, **dadurch gekennzeichnet, dass** die Erkennungseinheit (32) eine Auswerteeinheit (44) aufweist, die zur Ermittlung einer Bewegungsbahn (B) eines sich in einem Sicherheitsbereich (36) bewegenden Objekts vorgesehen ist.

7. Werkzeugmaschinensicherheitsvorrichtung nach einem der vorhergehenden Ansprüche, **dadurch gekennzeichnet, dass** die Erkennungseinheit (32) eine Auswerteeinheit (44) aufweist, die zur Ermittlung eines Geschwindigkeitsgrads eines sich in einem Sicherheitsbereich (36) bewegenden Objekts vorgesehen ist.

8. Werkzeugmaschinensicherheitsvorrichtung nach einem der vorhergehenden Ansprüche, **gekennzeichnet durch** eine Steuereinheit (46), die zur Auslösung einer Aktorikeinheit (48, 50) zur Durchführung einer Sicherheitsmaßnahme einen Erkennungsvorgang der Bilderfassungseinheit (34) und einen Erkennungsvorgang der Sensoreinheit (38) voraussetzt

9. Werkzeugmaschinensicherheitsvorrichtung nach einem der vorhergehenden Ansprüche, **gekennzeichnet durch** eine Steuereinheit (46), die in zumindest einem Betriebsmodus dazu vorgesehen ist, eine Aktorikeinheit (48, 50) zur Durchführung einer Sicherheitsmaßnahme abhängig von einem mittels der Sensoreinheit (38) ausgelösten Erkennungssignal auszulösen.

10. Werkzeugmaschinensicherheitsvorrichtung nach Anspruch 9, **gekennzeichnet durch** ein Mittel (54), das in einem Sperrmodus der Steuereinheit (46) dazu vorgesehen ist, das Auslösen der Aktorikeinheit (48, 50) zu sperren.

11. Werkzeugmaschinensicherheitsvorrichtung nach Anspruch 10, **dadurch gekennzeichnet, dass** das Mittel (54) in einem Freigabemodus der Steuereinheit (46) dazu vorgesehen ist, das Sperren abhängig von einem mittels der Bilderfassungseinheit (34) ausgelösten Erkennungssignal aufzuheben.

12. Werkzeugmaschinensicherheitsvorrichtung nach einem der vorhergehenden Ansprüche, **gekennzeichnet durch** eine Steuereinheit (46), die einen Kalibriermodus zur Kalibration der Erkennungseinheit (32) aufweist.

13. Werkzeugmaschine mit einer Werkzeugmaschinensicherheitsvorrichtung nach einem der vorhergehenden Ansprüche.

## Claims

1. Machine tool safety apparatus comprising a recognition unit (32) which is provided for recognizing an application situation in a machine tool (10), wherein the recognition unit (32) has an image acquisition unit (34) for monitoring a first safety region (36), **characterized in that** the recognition unit (32) comprises a sensor unit (38) which is different from the image acquisition unit (34) and is intended for monitoring a second safety region (40), wherein the sensor unit (38) has at least one sensitivity range for sensing a radiation within the infrared range.

2. Machine tool safety apparatus according to Claim 1, **characterized in that** the sensitivity range is provided for sensing a radiation within a thermal infrared range.

3. Machine tool safety apparatus according to either of the preceding claims, **characterized in that** the first safety region (36) encompasses the second safety region (40).

4. Machine tool safety apparatus according to one of the preceding claims, **characterized in that** the second safety region (40) corresponds to a tool region.

5. Machine tool safety apparatus according to one of the preceding claims, **characterized in that** the recognition unit (32) has an evaluating unit (44) for evaluating at least one feature from the group comprising colour, contour and texture with reference to image data acquired by the image acquisition unit (34).

6. Machine tool safety apparatus according to one of the preceding claims, **characterized in that** the recognition unit (32) has an evaluating unit (44) for determining a motion path (B_{<}) of an object moving in a safety region (36).

7. Machine tool safety apparatus according to one of the preceding claims, **characterized in that** the recognition unit (32) has an evaluating unit (44) for determining a speed of an object moving in a safety region (36).

8. Machine tool safety apparatus according to one of the preceding claims, **characterized by** a control unit (46) which, for triggering an actuator unit (48, 50) for carrying out a safety measure, requires a recognition process of the image acquisition unit (34) and a recognition process of the sensor unit (38).

9. Machine tool safety apparatus according to one of the preceding claims, **characterized by** a control unit (46) which, in at least one operating mode, is provided for triggering an actuator unit (48, 50) for carrying out a safety measure as a function of a recognition signal triggered by means of the sensor unit (38).

10. Machine tool safety apparatus according to Claim 9, **characterized by** means (54) which, in a blocking mode of the control unit (46), is provided for blocking the triggering of the actuator unit (48, 50).

11. Machine tool safety apparatus according to Claim 10, **characterized in that** the means (54), in an enabling mode of the control unit (46), is provided for cancelling the blocking as a function of a recognition signal triggered by means of the image acquisition unit (34).

12. Machine tool safety apparatus according to one of the preceding claims, **characterized by** a control unit (46) which has a calibrating mode for calibrating the recognition unit (32).

13. Machine tool having a machine tool safety apparatus according to one of the preceding claims.

## Revendications

1. Dispositif de sécurité pour machine-outil comprenant une unité de détection (32) qui est prévue pour détecter une situation d'utilisation dans une machine-outil (10), l'unité de détection (32) présentant une unité de saisie d'image (34) pour contrôler une première zone de sécurité (36), **caractérisé en ce que** l'unité de détection (32) comprend une unité de capteur (38) différente de l'unité de saisie d'image (34) pour contrôler une deuxième zone de sécurité (40), l'unité de capteur (38) présentant au moins une zone de sensibilité pour détecter un rayonnement dans la plage infrarouge.

2. Dispositif de sécurité pour machine-outil selon la revendication 1, **caractérisé en ce que** la zone de sensibilité est prévue pour détecter un rayonnement dans une plage infrarouge thermique.

3. Dispositif de sécurité pour machine-outil selon l'une quelconque des revendications précédentes, **caractérisé en ce que** la première zone de sécurité (36) comprend la deuxième zone de sécurité (40).

4. Dispositif de sécurité pour machine-outil selon l'une quelconque des revendications précédentes, **caractérisé en ce que** la deuxième zone de sécurité (40) correspond à une zone de l'outil.

5. Dispositif de sécurité pour machine-outil selon l'une quelconque des revendications précédentes, **caractérisé en ce que** l'unité de détection (32) présente une unité d'analyse (44) qui, à l'aide de données d'image détectées par l'unité de saisie d'image (34), est prévue pour analyser au moins une caractéristique parmi le groupe comprenant la couleur, le contour et la texture.

6. Dispositif de sécurité pour machine-outil selon l'une quelconque des revendications précédentes, **caractérisé en ce que** l'unité de détection (32) présente une unité d'analyse (44) qui est prévue pour déterminer une voie de déplacement (B<) d'un objet se déplaçant dans une zone de sécurité (36).

7. Dispositif de sécurité pour machine-outil selon l'une quelconque des revendications précédentes, **caractérisé en ce que** l'unité de détection (32) présente une unité d'analyse (44) qui est prévue pour déterminer un degré de vitesse d'un objet se déplaçant dans une zone de sécurité (36).

8. Dispositif de sécurité pour machine-outil selon l'une quelconque des revendications précédentes, **caractérisé par** une unité de commande (46) qui requiert une opération de détection de l'unité de saisie d'image (34) et une opération de détection de l'unité de capteur (38) pour déclencher une unité d'actionneur (48, 50) pour mettre en oeuvre une mesure de sécurité.

9. Dispositif de sécurité pour machine-outil selon l'une quelconque des revendications précédentes, **caractérisé par** une unité de commande (46), qui est prévue dans au moins un mode de fonctionnement pour déclencher une unité d'actionneur (48, 50) pour mettre en oeuvre une mesure de sécurité en fonction d'un signal de détection déclenché au moyen de l'unité de capteur (38).

10. Dispositif de sécurité pour machine-outil selon la revendication 9,
**caractérisé par** un moyen (54) qui est prévu, dans un mode de blocage de l'unité de commande (46), pour bloquer le déclenchement de l'unité d'actionneur (48, 50).

11. Dispositif de sécurité pour machine-outil selon la revendication 10, **caractérisé en ce que** le moyen (54) est prévu, dans un mode de libération de l'unité de commande (46), pour supprimer le blocage en fonction d'un signal de détection déclenché au moyen de l'unité de saisie d'image (34).

12. Dispositif de sécurité pour machine-outil selon l'une quelconque des revendications précédentes, **caractérisé par** une unité de commande (46), qui présente un mode de calibrage pour calibrer l'unité de détection (32).

13. Machine-outil avec un dispositif de sécurité pour machine-outil selon l'une quelconque des revendications précédentes.
